# EUROPEAN PATENT APPLICATION

(11) **EP 2 282 189 A1**
(43) Date of publication of application: **09.02.2011**
(21) Application number: 10171752.8
(22) Date of filing: 03.08.2010
(51) Int. Cl.: G01M 13/00

(54) **Apparatus for experimental investigation of axial seal systems of gas turbines**

(30) Priority: 03.08.2009 IT MI20091405
(71) Applicant: Ansaldo Energia S.p.A., Genova (IT)
(72) Inventor: Bozzi, Luca, 16142, GENOVA (IT); Traverso, Stefano, 16145, GENOVA (IT)
(74) Representative: Jorio, Paolo

(57) **Abstract**

An apparatus for experimental investigation of axial seal systems of gas turbines includes a test structure (2) having a test chamber (10), which is delimited by a first seal portion (26) and by a second seal portion (27) and extends along an axis (A). At least one of the first seal portion (26) and the second seal portion (27) is provided with a series of ribs (45, 52) transverse to the axis (A) The first seal portion (26) and the second seal portion (27) are arranged facing each other so as to form an axial seal system (53) according to the axis (A). Furthermore, the first seal portion (26) and the second seal portion (27) are at least partially made of a transparent material.

## Description

The present invention relates to an apparatus for experimental investigation of axial seal systems of gas turbines.

As known, the study of the features of systems of axial seals normally used between rotor and stator in gas turbines is carried out on test benches, by using appropriate apparatuses based on specific models which reproduce the features of the seal systems under investigation. The currently available investigation apparatuses essentially are of two main types.

There are rotating apparatuses, in which the seal is mounted on a circular crown as on real machines, and static apparatuses, in which the dummy rotor and stator portions of the axial seal systems are stationary. Both suffer however from drawbacks which seriously limit their use possibility.

Firstly, the versatility of known investigation apparatuses is generally poor, with regards to variety of both the seal systems which may be tested and the measurements which may be carried out. The models used in stationary apparatuses, and to a greater extent in rotating apparatuses, are indeed generally suitable for testing only one type of seal system. They are however very complex and form the main core of the whole apparatus. Therefore, testing different axial seal system geometries is very costly.

Static apparatuses allow to carry out discreet temperature measurements through variously located sensors and to determine estimates of the thermal exchange coefficient along the seal system on the basis of these measurements. The estimate is however rather rough and may be improved only at the cost of a considerable increase of complexity, because many sensors should be added, and housings and connections should be provided for each of them. Rotating apparatuses have even greater limitations, related to the presence of moving parts and leakages which may damage the correctness of measurements. Estimating the heat exchange coefficient may not even be feasible.

Furthermore, the known solutions typically employ a e. However, the compressor causes a non-controllable heating of the air (indeed, the entity of the heating depends on the pressure needed to feed the seal system, and thus on its features, which are not known being the object of investigation). The known apparatuses include a heat exchanger (intercooler), which reduces the intake air temperature. The heat exchanger (of the air-air or air-water type) however implies a high additional cost, in addition to management problems related to dimensions and noise.

It is an object of the present invention to provide an apparatus for experimental investigation of axial seal systems of gas turbines which is versatile, in particular from the point of view of the measurements to be carried out.

According to the present invention, an apparatus for experimental investigation of axial seal systems of gas turbines is provided as defined in claim 1.

The present invention will now be described with reference to the accompanying drawings, which illustrate a non-limitative embodiment thereof, in which:
- figure 1 is a simplified block diagram of an apparatus for experimental investigation of axial seal systems of gas turbines according to one embodiment of the present invention;
- figure 2 is an exploded perspective view of a test structure incorporated in the apparatus in figure 1;
- figure 3 is a side view of the test structure in figure 2;
- figure 4 is a side view of the test structure in figure 2, taken along a longitudinal plane;
- figure 5 is a top plan view of a first element of the test structure in figure 2;
- figure 6 is a side view of the first element in figure 5, taken along the plotting plane VI-VI in figure 5;
- figure 7 shows an enlarged detail of the view in figure 6;
- figure 8 is a bottom plan view of a second element of the test structure in figure 2;
- figure 9 is a side view of the second element in figure 8, taken along the plotting plane IX-IX in figure 8;
- figure 10 shows an enlarged detail of the view in figure 9;
- figure 11 is a top plan view of the first element of the test structure in figure 2, in a different operating configuration; and
- figure 12 is a top plan view of the second element of the test structure in figure 2, in a different operating configuration.

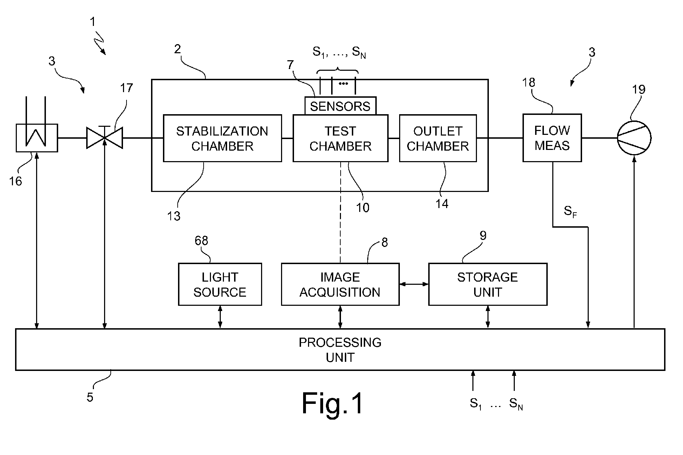

With reference to figure 1, an apparatus for experimental investigation of axial seal systems of gas turbines is indicated as a whole by numeral 1, and comprises a test structure 2, an air feeding system 3, a processing unit 5, a plurality of sensors 7, an image acquisition unit 8 and a storage unit 9.

The test structure 2 is made of a transparent material, e.g. polymethylmethacrylate, and has a test chamber 10, which defines an enlarged scale model of an axial seal system of a gas turbine during a step of investigating. The test structure 2 is further provided with a stabilization chamber 13 having the purpose of adjusting the air flow through the test chamber 10 and an outlet chamber 14, arranged upstream and downstream of the same, respectively.

The air feeding system 3 comprises a heater 16 and an adjustable throttle valve 17, at the inlet of the stabilization chamber 13, and a flow meter 18 and a sucking pump 19, downstream of the outlet chamber 14.

The heater 15 may be used to heat the air at the inlet of the test structure 2 in a controlled manner, in order to measure the convective heat exchange coefficient. The throttle valve 17 is instead usable to adjust the air pressure at the inlet of the test structure 2.

The sucking pump 19 is fluidically coupled to the inside of the test chamber 10 and causes a vacuum at the outlet of the test structure 2, so as to bring back an air flow which crosses heater 15, throttle valve 17, stabilization chamber 13, leaks through the test chamber 10 and reaches the outlet chamber 14 and the flow meter 18.

Sensors 7 comprise a plurality of temperature and pressure sensors (not shown here in detail) distributed about the test chamber 10 and thermally and fluidically coupled to the inside of the latter, respectively, to detect the temperature and pressure of the flowing air in respective locations.

The image acquisition unit 8 is controlled by the processing unit 5 to acquire images, in use, of the test chamber 10 which, as the rest of the test structure 2, is made of transparent material. The acquired images are stored in the storage unit 9.

The processing unit 5 also receives and processes temperature signals S₁, ..., S_{N} from the sensors 7, as well as a flow signal S_{F}, indicating the leakage through the test chamber 10, supplied by the flow meter 18. Furthermore, the processing unit 5 controls the operation of heater 16, throttle valve 17 and sucking pump 19.

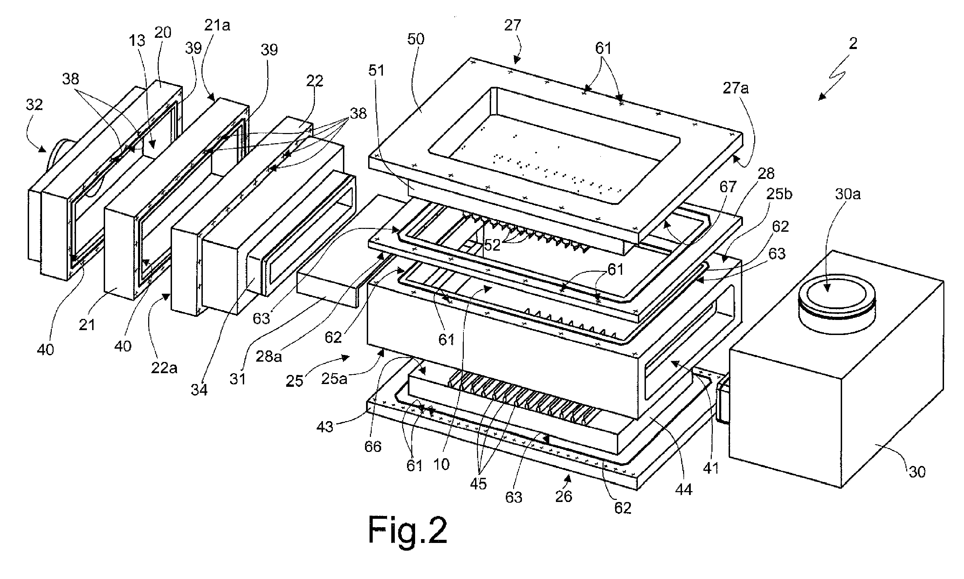

The test structure 2 will be described in greater detail, with reference to figures 2-10.

The test structure 2 comprises a plurality of modular elements, essentially made of the same transparent material, mutually sealingly coupled and sandwiched by means of locking elements. In one embodiment, the modular elements are made of polymethylmethacrylate (PMMA). Alternatively, other transparent materials may be used, such as for example special glasses, in particular low dispersion glasses and low distortion glasses.

In particular, the test structure 2 extends along a longitudinal axis A and, as shown in figures 2-4, comprises:
an inlet module 20, a grid housing 21 and a connection module 22, which define the stabilization chamber 13 therein;
a structural module 25, a rotor module 26, a stator module 27 and a spacer element 28, which define the test chamber 10; and
an outlet module 30, which defines the outlet chamber 14, downstream of the test chamber 10, and has an outlet aperture 30a.

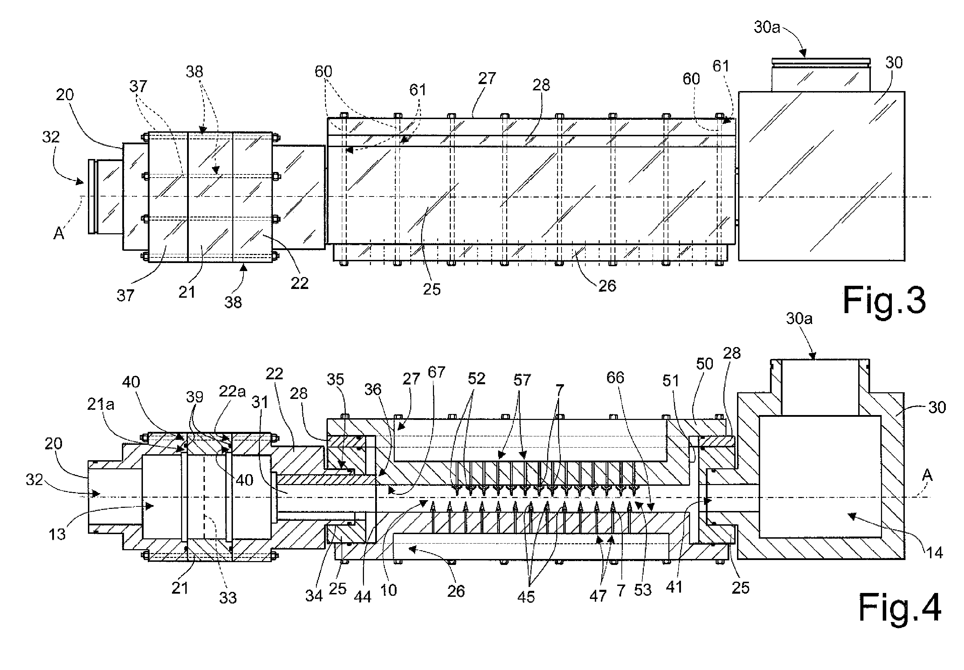

The test structure 2 further comprises a bridge-like joining element 31 (figures 2 and 4), placed between the connection module 22 and the structural module 25, as will be explained in further detail below.

The inlet module 20 is provided with an inlet aperture 32, obtained about the axis A (see figure 4, in particular). The grid housing 21 is placed downstream of the inlet module, supporting grids 33 adapted to uniform the air flow and make the speed and pressure profiles homogeneous at the inlet of the test chamber 10.

The connection module 22 (figures 2 and 4) has a hollow coupling portion 34, which extends about the axis A and engages a corresponding seat 35, obtained in a wall of the structural module 25 and communicating with the inside thereof through an aperture 36. The coupling portion 34 and the aperture 36 define a fluid passageway, which couples the stabilization chamber 13 to the test chamber 10. The bridge-like element 31 is placed in the fluid passageway and limits the transversal section thereof. In particular, the thickness of the bridge-like element 31 is chosen to prevent turbulences when entering the test chamber 10 due to sudden section variations.

Inlet module 20, grid housing 21 and connection module 22 are sandwiched throguh locking means including tie rods 37 inserted in respective seats 38 (figure 3). Seal rings 39 (figure 2) are accommodated in respective seats 40 of the inlet module 20 and of the grid housing 21, and cooperate with sealing surfaces, defined by faces 21a, 22a of the grid housing 21 and of the connection module 22, respectively, adjacent to the seal rings 39 themselves. Thereby, leakages through the walls of the stabilization chamber 13 are prevented.

As previously mentioned, the test chamber 10 is defined by structural module 25, rotor module 26, stator module 27 and spacer element 28. In detail, the structural module 25 is frame-shaped (figure 2) and has longer walls which extend parallel and on opposite sides to the axis A, laterally delimiting the test chamber 10. As mentioned, aperture 36 is obtained in one of the walls of the structural module 25, in particular one of the shorter walls adjacent to the stabilization chamber 13 (figures 2 and 4), and communicates with the seat 35, which accommodates the coupling portion 34 of the connection module 22. A further aperture 41 is made in the opposite shorter wall of the structural module 25. Aperture 36 and aperture 41 are aligned along axis A.

The rotor module 26 and the stator module 27 are removably carried on opposite faces 25a, 25b of the structural frame-like element 25 and close it so as to form a hollow body defining the test chamber 10 therein.

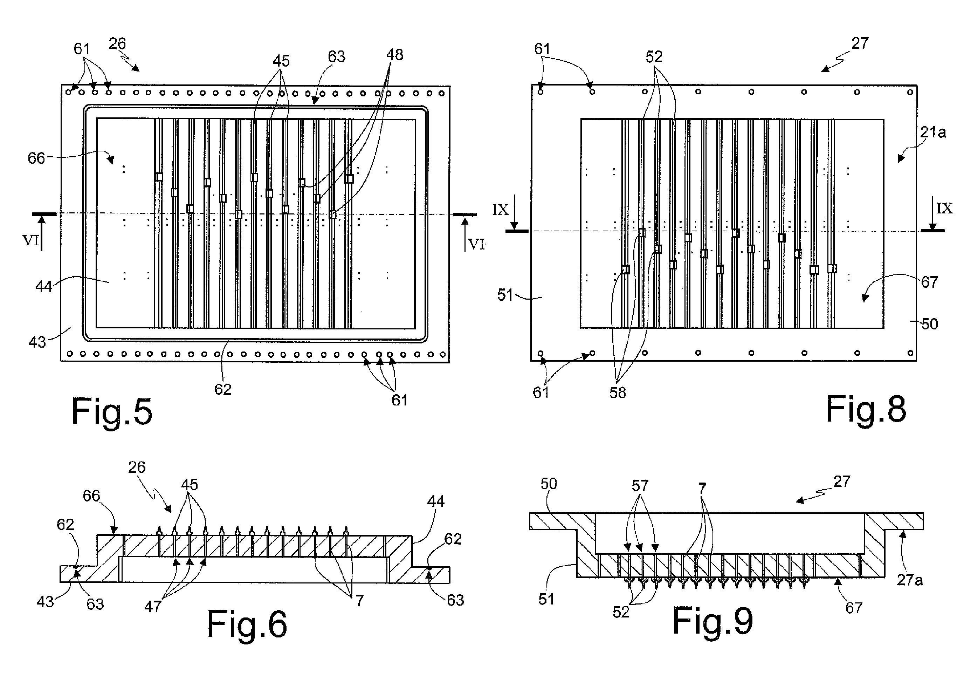

In detail, the rotor module 26 closes the structural element 25 on one side and defines a base of the test chamber 10. With further reference to figures 5-7, the rotor module 26 comprises a plate 43, frame-shaped in the example shown, from which a base 44 extends. Plate 43 rests against the face 25a of the structural element 25 (figures 2 and 4), so that the base 44 is arranged within the structural element 25 itself.

Base 44 carries, in turn (figures 4-6), a series of ribs 45 transverse to axis A, projecting in the direction opposite to the plate 43 towards the inside of the structural element 25. Furthermore, the ribs 45 are arranged in an axially asymmetric manner with respect to the base 44, which further has a dimension smaller than an inner dimension of the structural element 25, in the direction of axis A. Thereby, the rotor module 26 may be arranged in a plurality of positions along axis A and, furthermore, in positions rotated by 180°. Therefore, the axial position of the ribs 45 may also be varied.

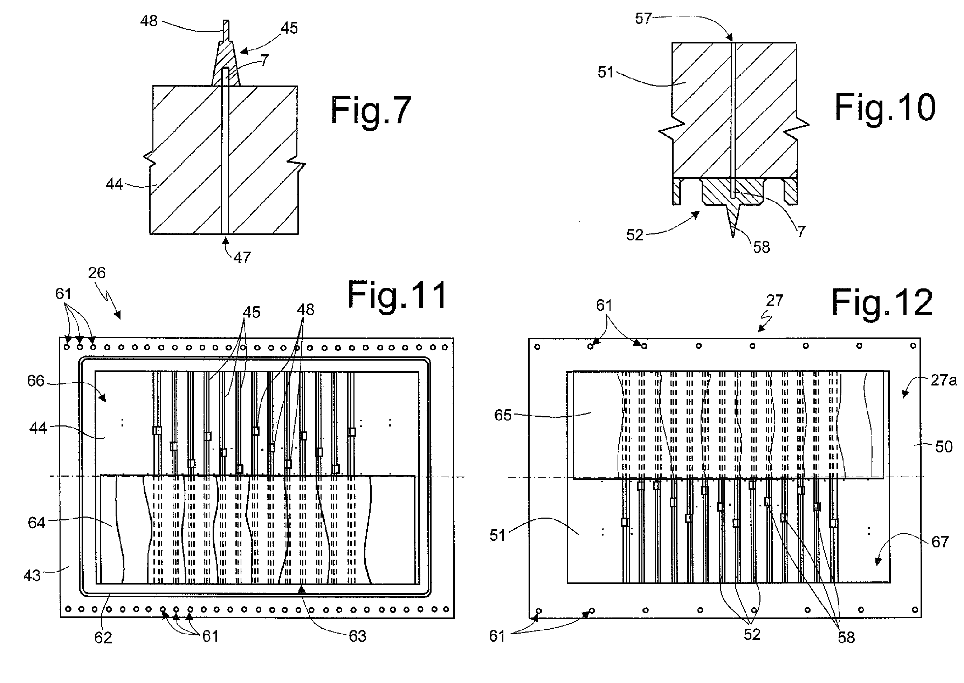

The rotor module 26 is provided with a plurality of housings 47 adapted to receive respective sensors 7, which in the embodiment shown herein include thermocouples and pressure switches (also see the enlarged detail in figure 7). In particular, the housings 47 are obtained close to respective ribs 45.

Moreover, the ribs 45 comprise metal inserts 48 (figures 5 and 7) arranged close to the housings 47 and facing the inside of the test chamber 10. From the sensors 7, the thermocouples are thermally coupled to respective metal inserts 48, and through the latter, to the air present in the test chamber 10. The pressure switches are placed in respective housings 47 communicating with the inside of the test chamber 10, so as to ensure fluid coupling.

In one embodiment (not shown), housings 47 and metal inserts 48 are selectively made close to some of the ribs 45.

The stator module 27 closes the structural element 25 on one side opposite to the rotor module 26 and defines an opposite base of the test chamber 10. The spacer element 28, also frame-shaped, is interposed between a face 25b of the structural element 25 (opposite to the face 25a) and the stator module 27.

Also with reference to figures 8-10, the stator module 27 comprises a frame-shaped plate 50, from which a base 51 extends. The plate 50 is coupled with one face 25b of the structural element 25, opposite to the face 25a, so that the base 51 is arranged inside the structural element 25 itself, facing the base 44 of the rotor module 26 (figures 2 and 4). The base 51 carries a series of ribs 52 transverse to axis A, projecting in a direction opposite to the plate 50 towards the inside of the structural element 25 (figures 8 and 9).

In test chamber 10, the rotor module 26 and the stator module 27 define the axial seal system along axis A which, as previously mentioned, is an enlarged scale model of a corresponding axial seal system for a gas turbine (see figure 4 in particular). For convenience, such a module will be simply referred to as labyrinth seal system 53. In the described embodiment, the axial seal system 53 is of the labyrinth type. In particular, the rotor portion of the axial seal system 53 is defined by base 44 and ribs 45 of the rotor module 26, while the corresponding stator portion is defined by base 51 and ribs 52 of the stator module 27. Ribs 45 and ribs 52 are intercalated along axis A (figure 4), with reciprocal distances depending on the pitch and on the axial position of the rotor module 26 which, as previously explained, is adjustable. It is worth noting that the pitch of the ribs 45 in the direction of axis A normally does not coincide with the pitch of the ribs 52. The radial clearance between ribs 45 and ribs 52, i.e. the reciprocal distance in the direction perpendicular to axis A, is defined by the thickness of the spacer element 28, which is specifically made and interchangeable. According to the type of axial seal system 53, ribs 45 and ribs 52 may be engaged or not. In alternative embodiments, the spacer module 28 may be omitted, may be interposed between the structural element 25 and the rotor module 26, or several spacer modules may exist.

The stator module 27 is further provided with a plurality of housings 57 adapted to receive respective sensors 7 (also see the enlarged detail in figure 10). In particular, the housings 57 are obtained close to respective ribs 52, which comprise metal inserts 58 facing the inside of the test chamber 10. The sensors 7 are thermally coupled to respective metal inserts 58 and, through the latter, to the air present in the test chamber 10.

In one embodiment (not shown), housings 57 and metal inserts 58 are selectively made close to some of the ribs 52.

Structural element 25, rotor module 26, stator module 27 and spacer element 28 are reversibly sandwiched by means of locking means including tie rods 60 arranged through respective seats 61 through the structural element 25, the rotor module 26, the stator module 27 and the spacer element 28 (figure 3). The rotor module 26 comprises, along the plate 43 in a direction parallel to axis A, a higher number of seats 61 close to one another, which allow the adjustment of the axial position of the rotor module 26 itself and the related locking (figure 2).

Seal rings 62 are housed in respective seats 63 of structural element 25, rotor module 26, and spacer element 28, and cooperate with sealing surfaces, defined by faces 25a, 27a, 28a of structural element 25, stator module 27 and spacer element 28, respectively, adjacent to the seal rings 62 themselves.

The sandwiching of structural element 25, rotor module 26, stator module 27 and spacer element 28 may be easily released by removing the tie rods 60. During the test campaign, this allows to remove the rotor module 26 and the stator module 27 in order to apply thermochromatic layers 64, 65 to their surfaces 66, 67 facing the inside of the test chamber 10, as shown in figures 11 and 12. The thermochromatic layers 64, 65 containing thermochromatic liquid crystals, for example, locally take a color depending on the temperature and thus allow heat exchange maps to be defined through their surface. In the described embodiment, in particular, the thermochromatic layers 64, 65 are applied to portions of the surfaces 66, 67 of rotor module 26 and of stator module 27 and extend both on the respective bases 44, 50 and on the ribs 45, 52.

Once the thermochromatic layers 64, 65 have been applied, the rotor module 26 and the stator module 27 are repositioned to close the structural element 25 and are sandwiched again to estimate the heat exchange coefficient of the axial seal system 53 under investigation.

Apparatus 1 may be used for carrying out many tests and for estimating or measuring various parameters.

A first type of test has been just mentioned above and exploits the thermochromatic layers 64, 65. In practice, the sucking pump 19 brings back a fluid flow (air) through the test chamber 10, where the rotor module 26 and the stator module 27 form the axial seal system 53, subject to leakage. The fluid flow passing modifies the pressure distribution inside the test chamber 10 and, if heated by the heater 16, causes temperature variations, in particular on the surfaces 66, 67 of rotor module 26 and stator module 27. The thermochromatic layers 64, 65 locally modify their color according to temperature variations, which may be so detected by the imagine acquisition unit 8 because the test chamber 10 is optically accessible. The acquired images, which thus represent temperature maps, are then processed by the processing unit 5, also off line, to obtain local values of the heat exchange coefficient.

Again by virtue of the optical accessibility of the test chamber 10, apparatus 1 allows to investigate the motion field along the axial seal system 53 by means of PIV (Particle Image Velocimetry) techniques, in order to determine fluid-dynamic parameters indicating its efficiency. In this case, a tracer is added to the fluid flow at the inlet of the test chamber 10, so that the vortexes which are formed along the axial seal system 53 may be displayed by means of a light source 68, e.g. a laser source, and may be filmed by the image acquisition unit 8. In one embodiment, the tracer is atomized oil.

Moreover, pressure and temperature measures are obviously available, detected by means of the sensors 7 (thermocouples and pressure switches) placed in the test structure 2, as well as flow measures supplied by the flow meter 18.

The described apparatus offers various advantages.

A first advantage is that the test structure, in particular the rotor module and the stator module, is made of transparent material, and thus offers optical access to the test chamber. The apparatus thus allows to easily carry out a wide range of measurements, which would not be otherwise available. In particular, by acquiring images from the outside of the test structure and then processing them, the fluid motion field in the test chamber may be studied and the local heat exchange coefficient on the walls of the axial seal object of investigation may be accurately estimated.

Another advantageous aspect is the modularity of the test structure, which allows to replace one or more elements of the test structure without modifying the remaining parts. Thereby, for example, a series of rotor modules and stator modules may be provided, which correspond to different axial seal types and may be validly used both during the step of designing, for testing the efficiency of the alternative solutions, and during the step of checking existing systems. In practice, modifying the scale module of the axial seal requires replacing only two modules, made by using rather cost-effective materials and methods. Furthermore, the use of various spacer elements and the possibility of varying the relative position of the rotor module and of the stator module allow to test different configurations of the same seal, thus ensuring the absence of leakage in all cases.

The apparatus is thus versatile from the point of view of the variety of structures which may be investigated both according to the type, and to variations of axial set-up and of radial clearance of the ribs in the same axial seal.

Using a sucking pump arranged downstream of the test chamber is also advantageous. Thereby, indeed the air at the inlet of the test chamber is avoided from being heated by compression in a poorly predictable manner. The need for a heat exchanger upstream of the test chamber is therefore overcome, with a consequent benefit in terms of costs and dimensions.

It is finally apparent that changes and variations may be made to the apparatus described, without departing from the scope of the present invention, as defined in the appended claims.

In particular, the rotor module and the stator module may be made so as to define axial seal models of different type. For example, the number, pitch, shape and arrangement of the ribs may be varied. Furthermore, the ribs may be made on only one side of the seal, either the rotor side or the stator side, while the other side may be defined by a flat surface.

## Claims

1. An apparatus for experimental investigation of axial seal systems of gas turbines comprising a test structure (2) having a test chamber (10), that is delimited by a first seal portion (26) and by a second seal portion (27) and extends along an axis (A), wherein at least one of the first seal portion (26) and the second seal portion (27) is provided with a series of ribs (45, 52) transverse to the axis (A) and wherein the first seal portion (26) and the second seal portion (27) are arranged facing one another so as to form an axial seal system (53) according to the axis (A);
**characterized in that** the first seal portion (26) and the second seal portion (27) are at least partially made of a transparent material.

2. An apparatus according to claim 1, wherein the test chamber (10) is optically accessible from outside through at least the first seal portion (26) and the second seal portion (27).

3. An apparatus according to claim 1 or 2, comprising a structural frame element (25) laterally delimiting the test chamber (10), having axially opposite apertures (36, 41) with respect to the axis (A) and made of transparent material.

4. An apparatus according to claim 3, wherein the first seal portion (26) and the second seal portion (27) are carried on opposite faces (25a, 25b) of the frame structural element (25), so as to form a hollow body internally defining the test chamber (10).

5. An apparatus according to claim 4, wherein the structural frame element (25), the first seal portion (26) and the second seal portion (27) are made as separate modular components, and comprising locking means (60, 61) for reversibly clamping the structural frame element (25), the first seal portion (26) and the second seal portion (27).

6. An apparatus according to claim 5, wherein the locking means include tie rods (60) arranged in respective seals (61) through the structural frame element (25), the first seal portion (26) and the second seal portion (27).

7. An apparatus according to any one of claims 4 to 6, comprising a frame spacer element (28), interposed between the structural frame element (25) and one of the first seal portion (26) and the second seal portion (27).

8. An apparatus according to claim 7 as appended to claim 5, wherein the frame spacer element (28) is provided with further seal coupling means (21a, 22a, 39, 40).

9. An apparatus according to any one of the foregoing claims, wherein at least either the first seal portion (26) or the second seal portion (27) is shaped so as to be arranged in a plurality of different axial position along the axis (A).

10. An apparatus according to any one of the foregoing claims, wherein the first seal portion (26) and the second seal portion (27) are provided with respective series of ribs (45, 52) transverse to the axis (A) and wherein the ribs (45) of the first seal portion (26) are intercalated to the ribs (52) of the second seal portion (27) along the axis (A).

11. An apparatus according to claim 10, comprising adjusting means (60, 61) for adjusting a relative axial position between the ribs (45) of the first seal portion (26) and the ribs (52) of the second seal portion (27), with respect to the axis (A).

12. An apparatus according to any one of the foregoing claims, wherein the first seal portion (26) comprises a first plate (43), from which a first base (44) extends in the direction of the axis (A), wherein the first plate (43) rests against the structural frame element (25), so that the first base (44) is arranged within the structural frame element (25), and wherein first ribs (45) are carried by the first base (44) and project towards the inside of the structural frame element (25).

13. An apparatus according to claim 12, wherein the second seal portion (27) comprises a second plate (50), from which a second base (51) extends in the direction of the axis (A), wherein the second plate (50) rests against the structural frame element (25), so that the second base (51) is arranged within the structural frame element (25), facing the first base (44) of the first seal portion (26), and wherein second ribs (52) are carried by the second base (51) and project towards the inside of the structural frame element (25).

14. An apparatus according to any one of the foregoing claims, comprising temperature sensors (7) arranged in respective housings (47, 57) of the first seal portion (26) and of the second seal portion (27).

15. An apparatus according to claim 14, wherein at least some of the ribs (45, 52) comprise metal inserts (58) and wherein at least some of the temperature sensors (7) are thermally coupled to respective metal inserts (58).

16. An apparatus according to any one of the foregoing claims, comprising a thermochromatic layer (64, 65) on a face (66, 67) of at least one of the first seal portion (26) and the second seal portion (27), toward the inside of the test chamber (10).

17. An apparatus according to any one of the foregoing claims, wherein the test chamber (10) has an inlet and an outlet (30a) and wherein a sucking pump (19) is coupled to the output (30a) of the test chamber (10).

18. An apparatus according to any one of the foregoing claims, comprising a processing unit (5), an image acquisition unit (8), controlled by the processing unit (5) for acquiring images of the test chamber (10) form outside the test chamber (10), and an image storing unit (9) for storing the images acquired by the image acquisition unit (8).
